# EUROPEAN PATENT APPLICATION

(11) **EP 0 591 673 A1**
(43) Date of publication of application: **13.04.1994**
(21) Application number: 93113650.1
(22) Date of filing: 26.08.1993
(51) Int. Cl.: B01D 46/10, B60H 3/06

(54) **Filter for ventilation ducts of motor vehicle passenger compartments**

(30) Priority: 07.09.1992 IT PD920158
(71) Applicant: NARDI Manuela, BALLOTTO Roberto d.b.a. EQUIP ITALIA s.n.c. di NARDI MANUELA & C., I-35132 Padova (IT)
(72) Inventor: Ballotto, Roberto, I-35100 Padova (IT)
(74) Representative: Modiano, Guido, Dr.-Ing.

(57) **Abstract**

The filter for ventilation ducts of motor vehicle passenger compartments comprises at least one layer (10) of non-woven fabric made of fibers and at least one layer (11) with activated carbon. The layers (10,11) are mutually associated by spacer elements (12) which form an empty region (13) between them.

## Description

The present invention relates to a filter for ventilation ducts of motor vehicle passenger compartments.

It is known that only some of the motor vehicles of the medium-high class have, at the intake of the ducts of the passenger compartment ventilation system, filters for purifying the air drawn from outside.

Nevertheless, the need is currently strongly felt to filter the air in order to purify it from odors, toxic gases, dust, pollen and anything else present in the atmosphere and to eliminate user's risk of irritations of sense and respiratory organs, in addition to the risk of the onset of disorders of various kinds linked to inhalation of toxic substances entering the passenger compartment.

The filters currently used for this purpose are substantially of two types: in a first type, the action is mainly mechanical, i.e. suitable to retain dust or other solid particles; in a second type, the action is mainly chemical, i.e. suitable to neutralize noxious gases.

The actions performed are therefore partial, since in the first case air entering the passenger compartment is unhealthy, since it contains a large amount of gases which mainly originate from the emissions of the exhausts of other vehicles.

In the second case there is no extreme mechanical filtering, and the air, despite being purified from gases, contains a large amount of dust, pollen, etc.

The aim of the present invention is to provide a filter for ventilation ducts of passenger compartments of motor vehicles, the structure whereof allows to eliminate the above described drawbacks in known types.

A consequent primary object is to provide a filter the structure whereof does not have high load losses and can thus be installed without considerably affecting the efficiency of the fans currently in use.

Another important object is to provide a filter which can be conveniently shaped so as to adapt to any kind of air intake for the ventilation of a motor vehicle passenger compartment.

A further object is to provide a filter which can be manufactured at low cost with conventional equipment and facilities.

With the foregoing and other objects in view, the invention provides a filter for ventilation ducts of passenger compartments of motor vehicles, characterized in that it comprises at least one layer of non-woven fabric made of fibers and at least one layer with activated carbon, said layers being mutually associated by spacer elements which form at least one empty region between them.

Further characteristics and advantages of the present invention will become apparent from the following detailed description of an embodiment thereof, illustrated only by way of non-limitative example in the accompanying drawings, wherein:

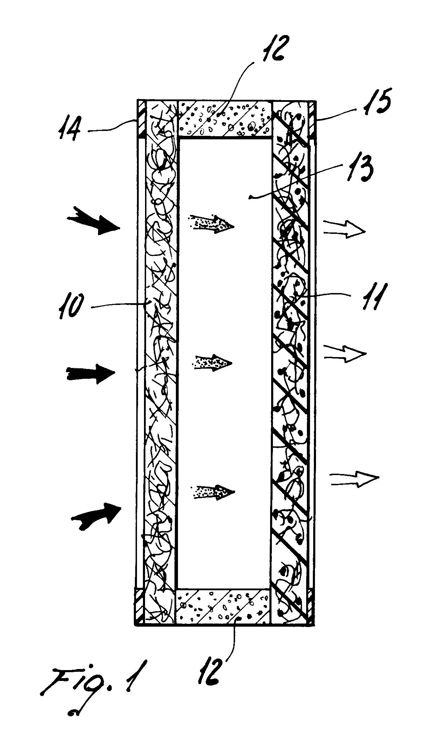

figure 1 is a transverse sectional view of the filter according to the invention.

With reference to the above figure, a filter according to the invention comprises a first layer 10 of non-woven fabric preferably made of synthetic fibers, and a second layer 11 with activated carbon impregnated in an alveolar medium.

Preferably, the first layer 10 is constituted by polyester fibers sized with synthetic resins, whereas the second layer is constituted by polyurethane foam impregnated with activated carbon in powder form.

The layers are mutually associated, for example by glueing, by perimetric and/or transverse spacer elements 12 which form an empty region 13 between them.

In practice an air space is thus formed.

The purpose is to perform air filtration in steps, first retaining the dust, pollen, etc., and then retaining the noxious gases, as indicated by the arrows, with minimum load loss.

The spacer elements 12 can be conveniently made for example of foamed polyurethane.

Possible perimetric and/or transverse laminar supports 14 and 15 made of plastic material, for example PVC, may be glued to the outer faces of the filter in order to give it greater consistency and mechanical strength.

In practice it has been observed that the intended aim and objects of the present invention have been achieved.

The filter in fact performs a complete action on the incoming air, completely purifying it even of the grease which generally soils the windshield, although it does not significantly affect load losses due to the presence of the empty region 13.

The filter can have such a perimetric profile as to adapt to any type of inlet duct or opening for the ventilation of motor vehicle passenger compartments and can be conveniently assembled directly during manufacture or be used as accessory for installation after sale.

The invention thus conceived is susceptible to numerous modifications and variations, all of which are within the scope of the inventive concept.

All the elements may furthermore be replaced with other technically equivalent ones.

In practice, the materials employed, so long as they are compatible with the contingent use, as well as the dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Filter for ventilation ducts of passenger compartments of motor vehicles, characterized in that it comprises at least one layer of non-woven fabric made of fibers and at least one layer with activated carbon, said layers being mutually associated by spacer elements which form at least one empty region between them.

2. Filter according to claim 1, characterized in that said at least one layer of non-woven fabric is constituted by polyester fibers sized with synthetic resins or equivalent materials.

3. Filter according to claim 1, characterized in that said at least one layer with activated carbon is constituted by polyurethane foam impregnated with activated carbon in powder form or the like.

4. Filter according to claim 1, characterized in that said spacer elements and said layers are mutually associated by glueing.

5. Filter according to one or more of the preceding claims, characterized in that said spacer elements are perimetric and/or transverse.

6. Filter according to one or more of the preceding claims, characterized in that it comprises, on its front and/or rear surface, laminar supports made of plastic material which are associated with the rest by glueing, said supports affecting the perimetric and/or transverse regions of the respective surfaces.

7. Filter according to one or more of the preceding claims, characterized in that said spacer elements are made of foamed polyurethane or equivalent materials.
